# EUROPÄISCHE PATENTSCHRIFT

(11) **EP 2 569 557 B1**
(45) Veröffentlichungstag und Bekanntmachung des Hinweises auf die Patenterteilung: **23.03.2016**
(21) Anmeldenummer: 11716813.8
(22) Anmeldetag: 28.03.2011
(51) Int. Cl.: F16H 59/02, F16H 61/26

(54) **VORRICHTUNG ZUR ÜBERTRAGUNG EINER SCHALTBEWEGUNG**
DEVICE FOR TRANSMITTING A SHIFT MOVEMENT
DISPOSITIF POUR TRANSMETTRE UN MOUVEMENT DE COMMANDE DE CHANGEMENT DE RAPPORT

(30) Priorität: 11.05.2010 DE 102010016907
(43) Veröffentlichungstag der Anmeldung: 20.03.2013
(73) Patentinhaber: Koki Technik Transmission Systems GmbH, 09399 Niederwürschnitz (DE)
(72) Erfinder: QUINGER, Torsten, 09419 Herold (DE); HENDEL, Mathias, 08412 Werdau (DE)
(74) Vertreter: Patentanwälte und Rechtsanwalt Weiß, Arat & Partner mbB
(86) Internationale Anmeldenummer: PCT/EP2011/001534
(87) Internationale Veröffentlichungsnummer: WO 2011/141091

(56) Entgegenhaltungen:
- EP-A1- 0 331 097
- EP-A1- 1 482 213
- EP-A2- 0 421 132
- DE-A1-102006 024 636
- DE-U1- 8 701 201
- FR-A1- 2 882 122
- FR-A3- 2 927 139

## Beschreibung

Die Erfindung betrifft eine Vorrichtung nach dem Oberbegriff des Anspruchs 1.

### Stand der Technik

Um in Kraftfahrzeugen Gänge verschleiss- und geräuscharm einlegen zu können, ist sowohl eine innere als auch eine äussere Schaltung notwendig. Über die äussere Schaltung werden die Schaltbewegungen des Fahrers auf die innere Schaltung und von dort auf eine Synchronisierungseinrichtung der zugehörigen Zahnradstufen übertragen.

In diesem Zusammenhang wird auf die EP 1 482 213 A1 hingewiesen. Dort ist eine Vorrichtung zur Übertragung einer Schaltbewegung eines Schalthebels offenbart.

Daneben wird auf die EP 0 331 097 A1 und die EP 0 421 132 A2 verwiesen, welche ebenfalls Vorrichtungen zur Übertragung einer Schaltbewegung eines Schalthebels zeigen.

Vorliegend wird insbesondere auf die äussere Schaltung abgestellt. Handelte es sich früher bei äusseren Schaltungen um einfache Schalthebel, haben sie sich inzwischen parallel zur Entwicklung des Getriebes zu komplexen Wahlbetätigungen verändert.

Vorrichtungen zur Übertragung einer Schaltbewegung weisen in der Regel den Schalthebel auf, welcher zum Schalten von Gängen um eine Achse schwenkbar ist. Hierbei wird der Schaltvorgang dadurch erleichtert, dass beim Betätigen des Schalthebels in einer Betätigungseinrichtung eine auf die Schaltwelle beim Schwenken der Schaltwelle wirkende Zusatzmasse vorgesehen ist. Diese Zusatzmasse erhöht das Massenträgheitsmoment der Schaltwelle, um am Handschalthebel während der Schaltvorgänge spürbare Kraftspitzen der Schaltkraft abzubauen. Ein entsprechendes Schaltgewicht ist in der DE 10 2005 062 170 A1 offenbart.

Nun können jedoch insbesondere beim Schalten während des Fahrens Schwingungen, Vibrationen, Stösse und/oder Geräusche von dem Schaltgetriebe über das Schaltgestänge an den Schalthebel übertragen. Eine derartige Übertragung von Vibrationen führt jedoch zu unerwünschten Schwingungs- und Geräuschabstrahlungen in einen Fahrzeuginnenraum, in dem die Schaltbetätigungsvorrichtung bzw. Schalthebel angeordnet ist. Dies wird vom Fahrer als unangenehm empfunden. Insbesondere führt dies zu erhöhtem Verschleiss der einzelnen Teile.

Aus dem Stand der Technik sind verschiedene Lösungswege zur Vermeidung der Übertragung der Schwingungen bekannt. In der Regel werden hier entweder Entkopplungssysteme vorgesehen, welche aber den Nachteil aufweisen, dass diese sehr aufwendig herzustellen sind, um entsprechende Übertragungen von Schwingungen oder Stössen zu verhindern.

### Aufgabe

Aufgabe der vorliegenden Erfindung ist es, die oben genannten Nachteile zu beseitigen und eine Vorrichtung zu schaffen, welche eine störungsfreie Übertragung von Schaltbewegungen ermöglicht. Gleichzeitig soll das Schaltgewicht sowie Schwingungen des Antriebs gedämpft werden, wobei die Steifigkeit des Schalthebels in Radial- und Achsrichtung beibehalten werden soll.

### Lösung der Aufgabe

Zur Lösung der Aufgabe führen die Merkmale nach Anspruch 1.

Die Vorrichtung zur Übertragung einer Schaltbewegung weist einen Schalthebel und ein Schaltgewicht auf. Der Schalthebel ist dabei bevorzugt aus Metall hergestellt, ebenso das Schaltgewicht. Zwischen dem Schalthebel und der Schaltwelle ist die Buchse angeordnet.

Die erfindungsgemässe Buchse ist metallisch und weist zum Einen eine Möglichkeit zur Verbindung mit der Schaltwelle und zum Anderen eine Aussenkontur zur Verbindung mit einer Innenkontur einer Bohrung des Schalthebels auf. Bei der Verbindung von Schalthebel und Buchse entstehen verschiedene Freiräume. Diese Freiräume drücken sich in Horizontal- und Vertikalnuten aus. Bevorzugt sind eine Horizontalnut und zumindest drei Vertikalnuten vorgesehen. Die Anzahl ist jedoch nicht festgelegt und kann durchaus variieren. Auch sei der Erfindung hinsichtlich der Form und der Ausgestaltung der Buchse bzw. der Aussenkontur sowie der Innenkontur des Schalthebels keinerlei Grenzen gesetzt. Wichtig ist, dass das Einsetzen der Buchse in die Bohrung des Schalthebels problemlos erfolgen kann und hinterher die Möglichkeit gegeben ist, entstandene Freiräume durch dämpfendes Material oder Federelemente auszufüllen.

In einem bevorzugten Ausführungsbeispiel werden die Horizontal- und Vertikalnuten durch Kunststoffspritzen oder Vulkanisieren miteinander verbunden. Gleichzeitig entsteht hierdurch eine Dämpfung. Vorteilhaft ist hierbei, dass jegliches Schweissen, wie es bisher notwendig war, entfällt.

Ferner weist die Schaltwelle einen Gewindezapfen und eine Verzahnung auf. Über die Verzahnung wird die Schaltbewegung des Schalthebels von der Buchse auf die Schaltwelle übertragen.

Beim Vulkanisieren oder Kunststoffspritzen kann entweder Gummi oder ein anderes Elastomer zum Einsatz kommen. Diese Elemente weisen den Vorteil auf, dass sie zum Einen leicht zu verarbeiten sind und zum Anderen neben der dämpfenden Wirkung auch eine verbindende Wirkung haben können. Selbstverständlich sind auch andere Elemente, welche die Voraussetzung einer dämpfenden Wirkung erfüllen, denkbar und sollen von der vorliegenden Erfindung umfasst sein.

Eine erfindungsgemässe Buchse weist auf ihrer Aussenkontur verschiedene Nuten auf, welche mit der Innenkontur der Ausnehmung des Schalthebels zusammenwirken. Vorteilhaft hierbei ist, dass beim Positionieren der Buchse in die Ausnehmung des Schalthebels eine hohe Winkelgenauigkeit bei Fügeoperationen erreicht werden kann.

Ein weiteres bevorzugtes Ausführungsbeispiel ist in der Weise gestaltet, dass die Aussenkontur der Buchse mit der Innenkontur der Ausnehmung der Schalthebels in der Weise zusammenwirkt, dass der Nutzer zunächst die Buchse einsetzt, leicht innerhalb der Ausnehmung verdreht und damit in Achsrichtung eine feste Verbindung mit hoher Steifigkeit schafft.

Ein weiteres bevorzugtes Ausführungsbeispiel weist für die Vertikalnuten, welche zwischen dem Schalthebel und der Buchse entstehen, zumindest ein Federelement auf. Dieses Federelement ist in der Weise gestaltet, dass es sich ohne weiteres in die Vertikalnut einfügt. Vorteilhaft hierbei wiederum ist, dass das aufwendige Schweissen und auch das Kunststoffspritzen bzw. Vulkanisieren der verschiedenen Teile entfällt. Ausserdem ist vorteilhaft, dass das Federelement ebenfalls eine elastische sowie dämpfende Wirkung aufweist.

### Figurenbeschreibung

Im Rahmen der Figurenbeschreibung wird die Erfindung unter Bezugnahme auf die anliegenden Zeichnungen und dort gezeigter bevorzugter Ausführungsform näher erläutert. Hierbei zeigt:
Figur 1 eine perspektivische Ansicht einer erfindungsgemässen Vorrichtung zur Übertragung einer Schaltbewegung ;
Figur 2 einen Längsschnitt durch die Vorrichtung nach Figur 1 entlang der Linie II - II;
Figur 3 eine perspektivische Ansicht einer erfindungsgemässen Buchse;
Figur 4 eine perspektivische Ansicht eines Teils eines erfindungsgemässen Schalthebels;
Figur 5 eine schematische Ansicht eines weiteren Ausführungsbeispiels einer erfindungsgemässen Vorrichtung zur Übertragung einer Schaltbewegung;
Figur 6 Längsschnitt durch die Vorrichtung nach Figur 5 entlang der Linie VI - VI;
Figur 7 eine perspektivische Ansicht eines weiteren Ausführungsbeispiels einer erfindungsgemässen Buchse;
Figur 8 eine perspektivische Ansicht einer weiteren Vorrichtung zur Übertragung einer Schaltbewegung;
Figur 9 einen Längsschnitt durch die Vorrichtung nach Figur 8 entlang der Linie IX - IX;
Figur 10 eine perspektivische Ansicht einer weiteren Buchse.
Figur 11 eine perspektivische Ansicht eines Ausführungsbeispiels eines Federelements.

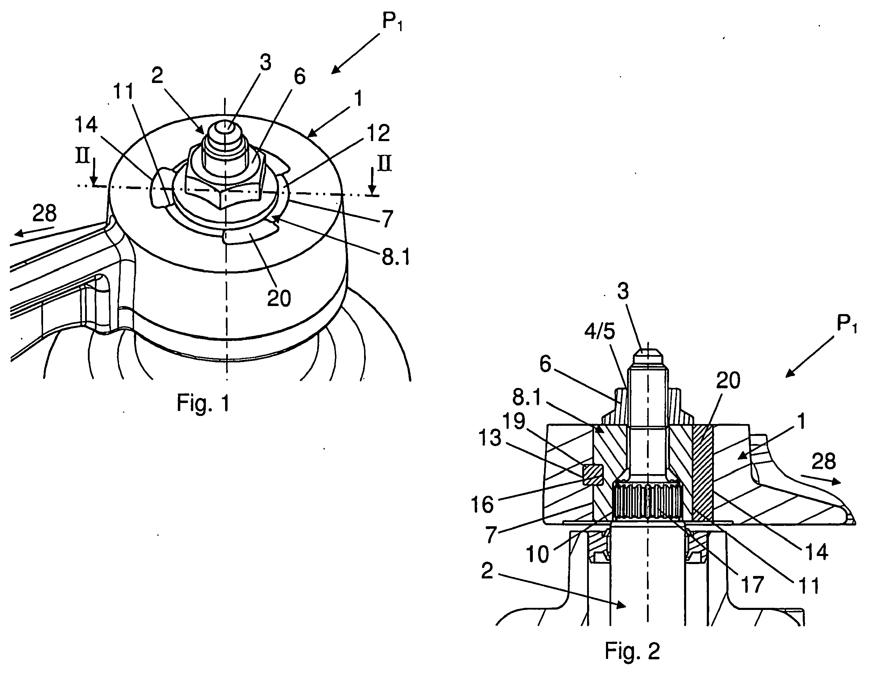

In Figur 1 ist ein Schalthebel 1 einer Vorrichtung P₁ gezeigt. An dessen nur teilweise sichtbaren Hebelarm 28 werden die Schaltkräfte eingeleitet und weiterhin ist an diesem Hebelarm 28 ggf. ein nicht näher gezeigtes Schaltgewicht befestigt. Weiterhin ist ein Gewindezapfen 3 einer Schaltwelle 2 zu erkennen. Dieser weist ein in Figur 2 sichtbares Aussengewinde 4 auf, womit eine Buchse 8.1 des Schalthebels 1 wiederum über ein Innengewinde 5 einer Mutter 6 axial mit der Schaltwelle 2 verspannt ist.

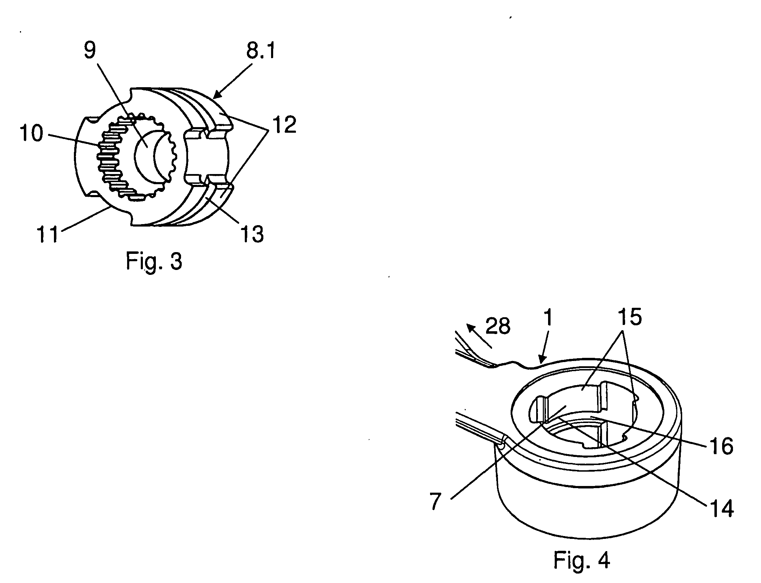

Ferner weist der Schalthebel 1 eine Bohrung 7 auf. Diese Bohrung 7 dient der Aufnahme einer Buchse 8.1. Die Einzelheiten der Buchse 8.1 lassen sich besser aus der Figur 3 erkennen. Die Buchse 8.1 weist eine Durchgangsbohrung 9 auf, welche einends mit einer Innenverzahnung 10 versehen ist. Ferner weist die Buchse 8.1 auf einer Aussenkontur 11 drei gleichmässig zueinander beabstandete Vorsprünge 12 auf, welche wiederum jeweils eine darin verlaufende, horizontal angeordnete Nut 13 umfassen, die die Vorsprünge 12 unterbricht.

Der Aussendurchmesser der Buchse 8.1 ist derart gestaltet, dass sie mit der Bohrung 7 des Schalthebels 1 eine leichtgängige Passung bildet. Weiterhin weist die Innenkontur 14 des Schalthebels 1 ebenfalls drei gleichmässig zueinander beabstandete Vorsprünge 15 auf, welche jeweils eine darin verlaufende, horizontal angeordnete Nut 16 umfassen.

In Figur 2 ist nun gut zu erkennen, wie der Gewindezapfen 3 die Buchse 8.1 durchquert, wobei an den Gewindezapfen 3 eine Außenverzahnung 17 anschließt, welche mit der Innenverzahnung 10 der Buchse 8.1 zusammenwirkt und so in Drehrichtung eine formschlüssige Verbindung bildet. Daneben sind verschiedene "Freiräume" sichtbar, die zwischen der Aussenkontur 11 Buchse 8.1 und der Innenkontur 14 des Schalthebels 1 ausgebildet werden, wenn die Buchse 8.1 in die Bohrung 7 des Schalthebels 1 eingesetzt ist. So ist zum Einen eine Horizontalnut 19 zu erkennen, welche sich aus dem Übereinanderliegen der Nuten 13 und 16 der Buchse 8.1 bzw. des Schalthebels 1 ergibt. Zum Anderen sind drei Vertikalnuten 20 zu erkennen, welche sich aus dem Übereinanderliegen der Aussenkontur 11 der Buchse 8.1 und der Innenkontur 14 des Schalthebels 1 im Bereich zwischen den Vorsprüngen 12 bzw. 15 ergibt. Sowohl die Horizontalnut 19 als auch die Vertikalnuten 20 werden mit einem Elastomer oder Gummi aufgefüllt. Durch diese Anordnung werden die einzelnen Bestandteile radial steif und biegesteif, in Torsionsrichtung jedoch durch den Gummi elastisch verbunden. Gleichzeitig wird eine Dämpfung erzielt.

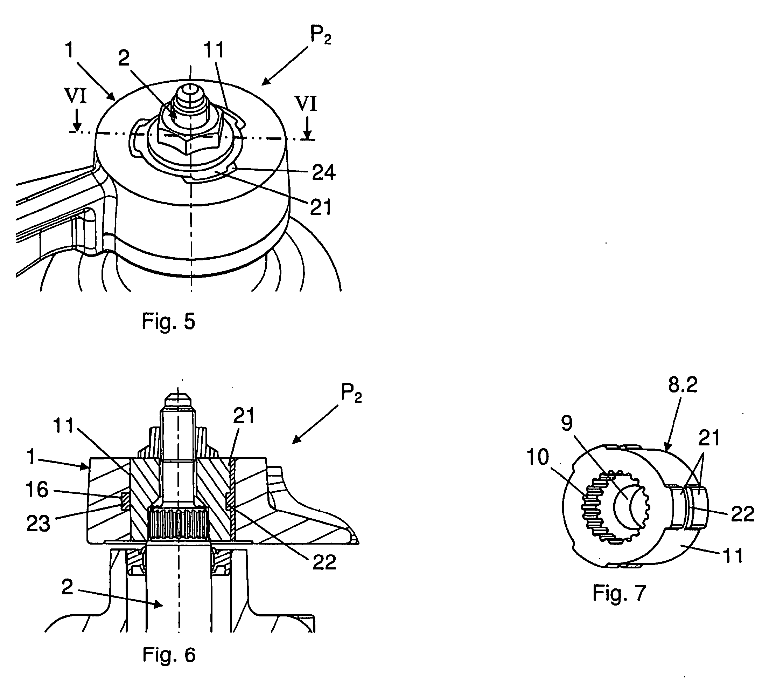

In den Figuren 5 und 6 ist ein weiteres Ausführungsbeispiel einer erfindungsgemässen Vorrichtung P₂ gezeigt. Hinsichtlich der Beschreibung wird Bezug auf die oben bereits erfolgte Beschreibung zu der Vorrichtung P₁ genommen. Die Vorrichtung P₂ unterscheidet sich lediglich durch die Buchse 8.2. Die Unterschiede sind insbesondere in Figur 7 zu erkennen. So sind bei der Buchse 8.2 lediglich Erhöhungen 21 erkennbar, von welchen sich drei gleichmässig über die Aussenkontur 11 der Buchse 8.2 erstrecken, wobei auch hier die Erhöhungen 21 jeweils mit einer horizontal verlaufenden Nut 22 versehen sind. Die Innenkontur 14 des Schalthebels 1 bleibt unverändert.

Ferner unterscheidet sich die Anordnung der Buchse 8.2 nach ihrem Einsatz in die Bohrung 7 des Schalthebels 1. So ist aus den Figuren 5 und 6 erkennbar, dass sich die Erhöhungen 21 der Buchse 8.2 auf Höhe der Bereiche zwischen den Vorsprüngen 15 der Innenkontur 14 des Schalthebels 1 befinden. Hierdurch wirken günstigere Beanspruchungsverhältnisse im Elastomer bei einer Torsionsbelastung.

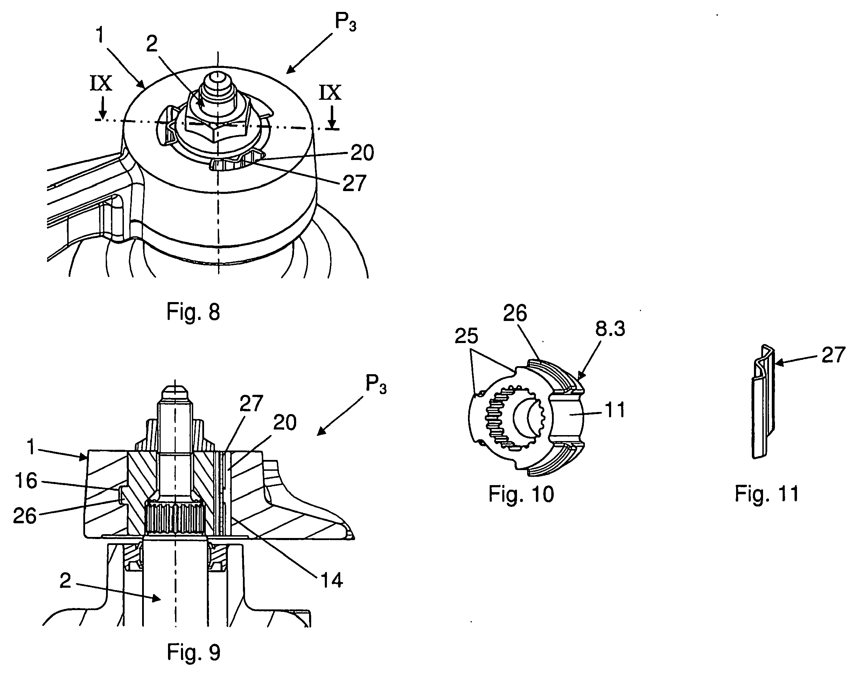

In den Figuren 8 und 9 ist ein weiteres Ausführungsbeispiel einer Vorrichtung P₃ gezeigt, die jedoch nicht zur Erfindung gehört. Hinsichtlich der Beschreibung wird erneut Bezug auf die oben bereits erfolgte Beschreibung zu der Vorrichtung P₁ genommen. Die Vorrichtung P₃ unterscheidet sich auch hier lediglich durch die Ausgestaltung der Buchse 8.3. Die Unterschiede sind insbesondere in Figur 10 zu erkennen. So sind bei der Buchse 8.3 erneut drei gleichmässig auf ihrer Aussenkontur 11 angeordnete Vorsprünge 25 erkennbar. Anstelle von Nuten sind die Vorsprünge 25 bei diesem Ausführungsbeispiel mit Wülsten 26 versehen. Die Innenkontur 14 des Schalthebels 1 bleibt erneut unverändert.

Ferner unterscheidet sich die Anordnung der Buchse 8.3 nach ihrem Einsatz in die Bohrung 7 des Schalthebels 1. So ist aus den Figuren 8 und 9 erkennbar, dass sich zwar die Vorsprünge 25 der Buchse 8.3 wieder auf Höhe der Vorsprünge 15 der Innenkontur 14 des Schalthebels 1 befinden. Jedoch füllen die Wülste 26 die Nuten 16 der Innenkontur des Schalthebels 1 aus, so dass diese nicht vollständig mit Gummi oder Elastomer aufgefüllt werden. Die Wülste 26 bilden in den Nuten 16 der Innenkontur 14 einen axialen Formschluss der Buchse 8.3 im Schalthebel 1.

Die drei Vertikalnuten 20, welche sich aus dem Übereinanderliegen der Aussenkontur 11 der Buchse 8.3 und der Innenkontur 14 des Schalthebels 1 im Bereich zwischen den Vorsprüngen 25 bzw. 15 ergeben, werden bei diesem Ausführungsbeispiel nicht mit Elastomer oder Gummi gefüllt, sondern mit einem Federelement 27, wie es in Figur 11 zu erkennen ist, belegt.

**Bezugszeichenliste**

| | | | | | |
|---|---|---|---|---|---|
| 1 | Schalthebel | 34 | | 67 | |
| 2 | Schaltwelle | 35 | | 68 | |
| 3 | Gewindezapfen | 36 | | 69 | |
| 4 | Aussengewinde | 37 | | 70 | |
| 5 | Innengewinde | 38 | | 71 | |
| 6 | Mutter | 39 | | 72 | |
| 7 | Bohrung | 40 | | 73 | |
| 8 | Buchse | 41 | | 74 | |
| 9 | Durchgangsbohrung | 42 | | 75 | |
| 10 | Innenverzahnung | 43 | | 76 | |
| 11 | Aussenkontur | 44 | | 77 | |
| 12 | Vorsprung | 45 | | 78 | |
| 13 | Nut | 46 | | 79 | |
| 14 | Innenkontur | 47 | | | |
| 15 | Vorsprung | 48 | | | |
| 16 | Nut | 49 | | | |
| 17 | Außenverzahnung | 50 | | | |
| 18 | Nut | 51 | | | |
| 19 | Horizontalnut | 52 | | P₁ | Vorrichtung |
| 20 | Vertikalnut | 53 | | P₂ | Vorrichtung |
| 21 | Erhöhung | 54 | | P₃ | Vorrichtung |
| 22 | Nut | 55 | | | |
| 23 | Horizontalnut | 56 | | | |
| 24 | Vertikalnut | 57 | | | |
| 25 | Vorsprung | 58 | | | |
| 26 | Wulst | 59 | | | |
| 27 | Federelement | 60 | | | |
| 28 | Schaltgewicht | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zur Übertragung einer Schaltbewegung eines Schalthebels (1) mit oder ohne Schaltgewicht (28) auf eine Schaltwelle (2), wobei der Schalthebel (1) über eine Buchse (8.1, 8.2, 8.3) mit der Schaltwelle (2) verbunden ist und die Verbindung zwischen Schalthebel (1) und Buchse (8.1, 8.2, 8.3) ganz oder teilweise durch Kunststoffspritzen oder Vulkanisieren gebildet ist
**dadurch gekennzeichnet,**
**dass** die Buchse (8.1, 8.2) Nuten (13, 22) umfasst, welche geeignet sind, mit in dem Schalthebel (1) vorhandenen Nuten (16) eine Horizontalnut (19, 23) auszubilden.

2. Vorrichtung nach Anspruch 1, **dadurch gekennzeichnet, dass** der Schalthebel (1) eine Bohrung (7) aufweist.

3. Vorrichtung nach Anspruch 1 oder 2, **dadurch gekennzeichnet, dass** die Schaltwelle (2) einen Gewindezapfen (3) mit Verzahnung (17) aufweist, welcher geeignet ist, die Schaltbewegung auf ein Getriebe umzuleiten.

4. Vorrichtung nach einem der Ansprüche 1 bis 3, **dadurch gekennzeichnet, dass** die Horizontalnut (19, 23) durch Kunststoffspritzen oder Vulkanisieren ausfüllbar ist.

5. Vorrichtung nach einem der vorherigen Ansprüche, **dadurch gekennzeichnet, dass** zwischen der Buchse (8.1, 8.2, 8.3) und dem Schalthebel (1) zumindest eine Vertikalnut (20, 24) ausgebildet ist.

6. Vorrichtung nach Anspruch 5, **dadurch gekennzeichnet, dass** die Vertikalnut (20, 24) durch Vulkanisieren oder Kunststoffspritzen ausfüllbar ist.

7. Vorrichtung nach Anspruch 5, **dadurch gekennzeichnet, dass** die Vertikalnut (20) ein Federelement aufnimmt.

8. Vorrichtung nach einem der vorherigen Ansprüche, **dadurch gekennzeichnet, dass** die Buchse (8.1, 8.2, 8.3) über eine Innenverzahnung (10) verfügt, welche geeignet ist, mit einer Außenverzahnung (17) der Schaltwelle (2) zusammenzuwirken.

## Claims

1. A device for transmitting a shift movement of a gearshift lever (1) with or without a gearshift mass (28) on a gearshift shaft (2), the gearshift lever (1) being connected to the gearshift shaft (2) via a bush (8.1, 8.2, 8.3) and the connection between the gearshift lever (1) and the bush (8.1, 8.2, 8.3) being formed entirely or partially by plastics injection moulding or vulcanisation,
**characterised in that**
the bush (8.1, 8.2) comprises grooves (13, 22) which are suitable for forming a horizontal groove (19, 23) with grooves (16) present in the gearshift lever (1).

2. A device according to Claim 1, **characterised in that** the gearshift lever (1) has a bore (7).

3. A device according to Claim 1 or 2, **characterised in that** the gearshift shaft (2) has a threaded stem (3) with teeth (17) which is suitable for redirecting the shift movement to a gearbox.

4. A device according to one of Claims 1 to 3, **characterised in that** the horizontal groove (19, 23) can be filled by plastics injection moulding or vulcanisation.

5. A device according to one of the preceding claims, **characterised in that** at least one vertical groove (20, 24) is formed between the bush (8.1, 8.2, 8.3) and the gearshift lever (1).

6. A device according to Claim 5, **characterised in that** the vertical groove (20, 24) can be filled by vulcanisation or plastics injection moulding.

7. A device according to Claim 5, **characterised in that** the vertical groove (20) accommodates a spring element.

8. A device according to one of the preceding claims, **characterised in that** the bush (8.1, 8.2, 8.3) has internal teeth (10) which are suitable for cooperating with external teeth (17) of the gearshift shaft (2).

## Revendications

1. Dispositif pour transmettre un mouvement de commande de changement de rapport d'un levier de vitesses (1) avec ou sans poids de commande (28) sur un arbre de commande (2), le levier de vitesses (1) étant connecté par l'intermédiaire d'une douille (8.1, 8.2, 8.3) à l'arbre de commande (2) et la connexion entre le levier de vitesses (1) et la douille (8.1, 8.2, 8.3) étant formée entièrement ou partiellement par injection de matière plastique ou vulcanisation,
**caractérisé par le fait**
**que** la douille (8.1, 8.2) comporte des rainures (13, 22) qui sont conçues pour former, avec des rainures (16) présentes dans le levier de vitesses (1), une rainure horizontale (19, 23).

2. Dispositif selon la revendication 1, **caractérisé par le fait que** le levier de vitesses (1) présente un alésage (7).

3. Dispositif selon la revendication 1 ou 2, **caractérisé par le fait que** l'arbre de commande (2) présente un tourillon fileté (3) avec une denture (17) qui est conçu pour dévier le mouvement de commande de changement de rapport à un engrenage.

4. Dispositif selon l'une des revendications 1 à 3, **caractérisé par le fait que** la rainure horizontale (19, 23) peut être remplie par injection de matière plastique ou vulcanisation.

5. Dispositif selon l'une des revendications précédentes, **caractérisé par le fait qu'**entre la douille (8.1, 8.2, 8.3) et le levier de commande (1) est réalisée au moins une rainure verticale (20, 24).

6. Dispositif selon la revendication 5, **caractérisé par le fait que** la rainure verticale (20, 24) peut être remplie par vulcanisation ou injection de matière plastique.

7. Dispositif selon la revendication 5, **caractérisé par le fait que** la rainure verticale (20) reçoit un élément ressort.

8. Dispositif selon l'une des revendications précédentes, **caractérisé par le fait que** la douille (8.1, 8.2, 8.3) dispose d'une denture intérieure (10) qui est conçue pour coopérer avec une denture extérieure (17) de l'arbre de commande (2).
